# EUROPÄISCHE PATENTSCHRIFT

(11) **EP 3 664 960 B1**
(45) Veröffentlichungstag und Bekanntmachung des Hinweises auf die Patenterteilung: **10.06.2026**
(21) Anmeldenummer: 18755761.6
(22) Anmeldetag: 09.08.2018
(51) Int. Cl.: B23Q 3/155, B23B 29/24

(54) **WERKZEUGREVOLVER**
TOOL TURRET
TOURELLE PORTE OUTILS

(30) Priorität: 12.08.2017 DE 102017007648
(43) Veröffentlichungstag der Anmeldung: 17.06.2020
(73) Patentinhaber: Kolibri Beteiligung GmbH, 51149 Köln (DE)
(72) Erfinder: GIESLER, Steffen, 72458 Albstadt (DE); EWALD, Marius, 72793 Pfullingen (DE)
(74) Vertreter: Bartels und Partner, Patentanwälte
(86) Internationale Anmeldenummer: PCT/EP2018/071642
(87) Internationale Veröffentlichungsnummer: WO 2019/034528

(56) Entgegenhaltungen:
- GB-A- 2 144 668
- US-A1- 2011 094 355
- US-A1- 2014 157 559

## Beschreibung

Die Erfindung betrifft einen Werkzeugrevolver, insbesondere vorgesehen für den Einsatz bei einer Werkzeugmaschine.

Werkzeugrevolver, die an einer betreffenden Werkzeugmaschine anbringbar sind, sind in unterschiedlichen Ausgestaltungen Stand der Technik. Wie beispielhaft die Dokumente DE 10 2005 033 890 A1 oder DE 10 2014 003 336 A1 zeigen, weisen solche Werkzeugrevolver üblicherweise einen mit einer betreffenden Werkzeugmaschine verbindbaren Grundkörper auf, an dem eine Werkzeugscheibe um eine Revolverachse drehbar gelagert ist, wobei die Werkzeugscheibe Arbeitsstationen aufweist, die mit Bearbeitungswerkzeugen bestückbar sind und wobei ausgewählte Arbeitsstationen durch Drehen der Werkzeugscheibe in eine Arbeitsposition einstellbar sind. Bei den Bearbeitungswerkzeugen, die zum Einsatz kommen sollen, handelt es sich hauptsächlich um Werkzeuge zur spanabhebenden Bearbeitung, wie Bohr-, Dreh- oder Fräswerkzeuge. Zur Anpassung an jeweilige unterschiedliche Bearbeitungsaufgaben sind Wechselvorgänge durchzuführen, bei denen ein an einer betreffenden Arbeitsposition befindliches Bearbeitungswerkzeug ausgewechselt und durch ein Bearbeitungswerkzeug anderer Art ersetzt wird. Bei bestimmten Fertigungsaufgaben, wie bei Werkstücken für die Fertigung von Kleinserien, ist ein häufiger Wechsel unterschiedlicher, zum Einsatz kommender Bearbeitungswerkzeuge erforderlich.

Dies führt zu einem erheblichen Arbeitsanfall für das Bedienpersonal und dadurch zu einer Erhöhung der Bearbeitungskosten.

Die GB 2 144 668 A beschreibt einen Werkzeugrevolver, insbesondere vorgesehen für den Einsatz bei einer Werkzeugmaschine und für einen automatisierten Werkzeugwechselvorgang, wobei in zumindest einer Arbeitsstation einer schwenkbaren Werkzeugscheibe jeweils ein für die Aufnahme eines Bearbeitungswerkzeuges vorgesehener Halter mittels einer der jeweiligen Arbeitsstation zugehörigen Spanneinrichtung in wiederlösbarer Weise an der Werkzeugscheibe festlegbar ist, wobei in einer von der Arbeitsposition der Werkzeugscheibe verschiedenen Einstellposition die jeweilige Spanneinrichtung unter Belassen des Halters an der Werkzeugscheibe aktivier- oder deaktivierbar ist.

Weitere Werkzeugrevolver gehen aus der US 2014/0157559 A1 und der US 2011/0094355 A1 hervor.

**Im** Hinblick auf diese Problematik stellt sich die Erfindung die Aufgabe, einen Werkzeugrevolver zur Verfügung zu stellen, der besonders rationell und kostengünstig einsetzbar ist.

Erfindungsgemäß ist diese Aufgabe durch einen Werkzeugrevolver gelöst, der die Merkmale des Patentanspruches 1 in seiner Gesamtheit aufweist.

Gemäß dem Wortlaut des Anspruches 1 ist der erfindungsgemäße Werkzeugrevolver für einen automatisierten Werkzeugwechselvorgang vorgesehen, wobei in zumindest einer Arbeitsstation der Werkzeugscheibe jeweils ein für die Aufnahme eines Bearbeitungswerkzeuges vorgesehener Halter mittels einer der jeweiligen Arbeitsstation zugehörigen Spanneinrichtung in wieder lösbarer Weise an der Werkzeugscheibe festlegbar ist, wobei zumindest in der Arbeitsposition der Werkzeugscheibe der Halter in axialer und radialer Richtung mittels der Spanneinrichtung hydraulisch und über einen Bajonettverschluss mechanisch festgelegt ist, wobei in einer von der Arbeitsposition der Werkzeugscheibe verschiedenen Einstellposition die jeweilige hydraulisch festlegende Spanneinrichtung unter Belassen des Halters an der Werkzeugscheibe aktivier- oder deaktivierbar ist, und wobei in einer von der Arbeits- und der Einstellposition verschiedenen Wechselposition der Werkzeugscheibe die betreffende mechanisch festlegende Spanneinrichtung den Halter derart freigibt, dass dieser von der Werkzeugscheibe abnehmbar und gegen einen anderen einzuwechselnden Halter tauschbar ist. Dadurch, dass in Abhängigkeit vom Bewegen der für einen Werkzeugwechsel vorgesehenen Arbeitsstation in eine Einstellposition und in eine Wechselposition die betreffende Spanneinrichtung aktivier- oder deaktivierbar ist, erfolgt der Ablauf des Werkzeugwechselvorgangs bis zur Freigabe des auszuwechselnden Werkzeuges in der Wechselposition maschinengesteuert. Bei Durchführen des Abnehmens des auszutauschenden Werkzeuges in der Wechselposition und des Einsetzens des neuen Werkzeuges mittels eines Handhabungsroboters ist ein vollautomatischer Werkzeugwechsel und somit ein mannloser Betrieb der Gesamtanlage realisierbar. Der automatische Werkzeugwechsel verringert die Rüstkosten und führt zu einer entsprechenden Reduzierung von Arbeitszeit und Arbeitskosten.

Bei vorteilhaften Ausführungsbeispielen ist die jeweilige Spanneinrichtung ortsfest am Umfang der Werkzeugscheibe festgelegt und weist einen hydraulisch betätigbaren Spannring auf, mit dem eine axiale Festlegekraft auf den zuordenbaren Halter ausübbar ist.

Mit Vorteil kann die Anordnung derart getroffen sein, dass die jeweilige Spanneinrichtung einen Energiespeicher aufweist, der nach Wegnahme der Festlegekraft die Rückstellbewegung des Spannringes in seine den Halter freigebende Stellung unterstützt. Als selbstrückstellende Einrichtung ist die Spanneinrichtung in einfacher und kompakter Bauweise realisierbar.

Für die hydraulische Betätigung des Spannringes kann mit Vorteil eine Hydraulikkammer in einem Aufnahmegehäuse des Spannringes vorgesehen sein, deren Kammerdruck sich über einen Hydraulikkolben einstellen lässt, der mittels einer Betätigungseinrichtung ansteuerbar ist.

Die Spanneinrichtung ist in besonders einfacher und kompakter Bauweise ausbildbar, wenn die Betätigungseinrichtung aus einer Einstellschraube gebildet ist, die mit zunehmender Einschraubtiefe in das Aufnahmegehäuse des Spannringes den Hydraulikkolben in die Hydraulikkammer unter Erhöhung des Kammerdruckes hinein verfährt, der mit der Reduzierung der Einschraubtiefe zusehends wieder abnimmt.

Bei vorteilhaften Ausführungsbeispielen ist in die Werkzeugscheibe ein Antrieb, vorzugsweise in Form eines Elektromotors, integriert, der eine Antriebswelle antreibt, die mittels einer Stelleinrichtung von einer gekuppelten in eine ausgekuppelte Position und umgekehrt innerhalb der Werkzeugscheibe längsverfahrbar geführt ist und die in einer gekuppelten Position dem Antrieb eines im Halter aufgenommenen Bearbeitungswerkzeuges in der Arbeitsposition der Werkzeugscheibe dient, sowie dem Betätigen der Einstellschraube der Spanneinrichtung in der Einstellposition der Werkzeugscheibe. Werkzeugantrieb und die Betätigung der Spanneinrichtung erfolgen daher gleichermaßen mittels der Antriebswelle.

Bei vorteilhaften Ausführungsbeispielen weist die Stelleinrichtung für das Längsverfahren der Antriebswelle einen hydraulisch ansteuerbaren Betätigungskolben auf, der entgegen der Kraft eines weiteren Energiespeichers die Antriebswelle von der gekuppelten in die entkuppelte Position fährt, wobei bei einem Drucklosmachen des hydraulischen Betätigungskolbens dieser Energiespeicher die Antriebswelle wieder in die gekuppelte Position bringt.

Bei vorteilhaften Ausführungsbeispielen weist die Antriebswelle an ihrem dem Ein- und Auskuppeln dienenden, längsverfahrbaren Kupplungsende ein weiteres Kupplungsende auf, das, in der Wechselposition der Werkzeugscheibe um einen vorgebbaren Schwenkwinkel gedreht, einen Bajonettverschluss zwischen Halter und Spanneinrichtung löst und wieder herstellt, zwecks Auswechselns des Halters gegen einen anderen Halter.

Mit Vorteil kann die Anordnung derart getroffen sein, dass der Bajonettverschluss in einer Aufnahme der Spanneinrichtung für den Halter mindestens einen Festlegevorsprung aufweist, der entlang einer zuordenbaren Längsführung des Halters in eine Eingriffsposition verfahren, nach Verschwenken der Aufnahme der Spanneinrichtung mittels der Antriebswelle und Herstellen des Bajonettverschlusses in eine Festlegeposition gelangt, bei der der Halter in der Spanneinrichtung aufgenommen ist, und wobei der Bajonettverschluss sich in umgekehrter Abfolge wieder lösen lässt.

Zumindest in der Arbeitsposition der Werkzeugscheibe ist der Halter in axialer und radialer Richtung mittels der Spanneinrichtung hydraulisch bzw. über den Bajonettverschluss mechanisch festgelegt.

Nachstehend ist die Erfindung anhand eines in der Zeichnung dargestellten Ausführungsbeispieles im Einzelnen erläutert. Es zeigen:
- Fig. 1: eine Draufsicht des Ausführungsbeispieles des erfindungsgemäßen Werkzeugrevolvers;
- Fig. 2: einen teilweise schematisch vereinfacht gezeichneten in einer Radialebene verlaufenden Zentralschnitt der Werkzeugscheibe des Ausführungsbeispieles des Werkzeugrevolvers, wobei ein Werkzeughalter in der Arbeitsposition dargestellt ist;
- Fig. 2a: einen gegenüber Fig. 2 vergrößert gezeichneten Teilschnitt des in Fig. 2 mit Ila bezeichneten Bereichs;
- Fig. 2b: einen gegenüber Fig. 2 vergrößert gezeichneten Teilschnitt des in Fig. 2 mit Ilb bezeichneten Bereichs;
- Fig. 3: einen der Fig. 2 entsprechenden Zentralschnitt, wobei sich ein Werkzeughalter in der um 12° gegenüber der Arbeitsposition verschwenkten Einstellposition befindet;
- Fig. 3a: einen gegenüber Fig. 3 vergrößert gezeichneten Teilschnitt des in Fig. 3 mit IIIa bezeichneten Bereichs;
- Fig. 4: einen Längsschnitt einer gesondert dargestellten Spanneinrichtung der Werkzeugscheibe;
- Fig. 5 und 6: perspektivische Schrägansichten der Spanneinrichtung von Fig. 4, gesehen auf die bezüglich der Werkzeugscheibe innenliegende Seite bzw. auf die außenliegende Seite der Spanneinrichtung;
- Fig. 7: eine perspektivische Schrägansicht eines gesondert dargestellten Werkzeughalters, gesehen auf die bezüglich der Werkzeugscheibe innenliegende Seite; und
- Fig. 8: eine Seitenansicht des Werkzeughalters von Fig. 7.

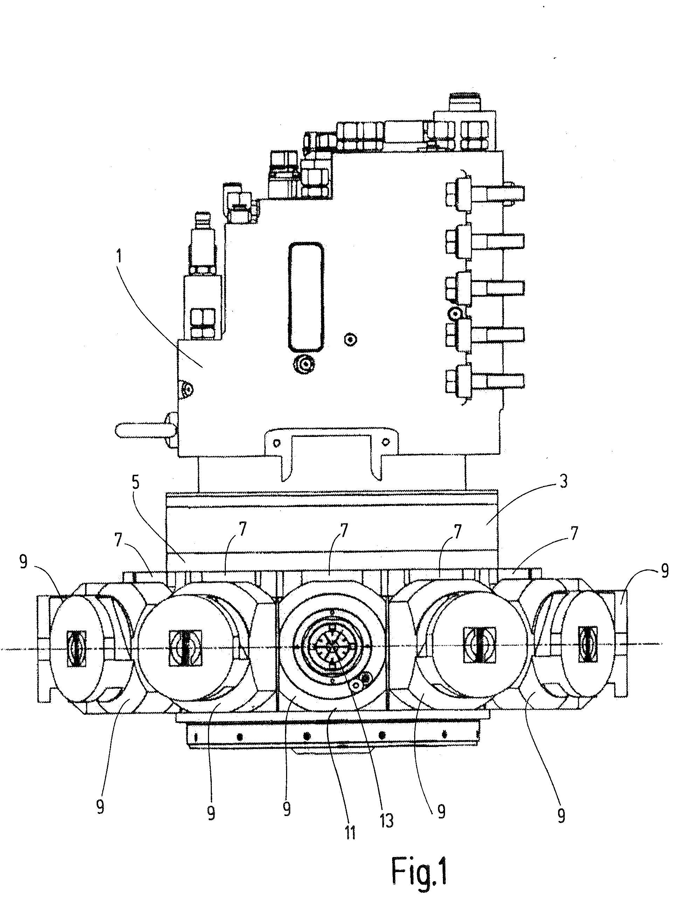

In der Fig. 1, die das Ausführungsbeispiel des erfindungsgemäßen Werkzeugrevolvers zeigt, ist ein Grundkörper mit 1 bezeichnet, der mit einer (nicht dargestellten) Werkzeugmaschine verbindbar ist. Der Grundkörper 1 weist ein kreiszylinderförmiges, zu einer Revolverachse konzentrisches Zentralteil 3 auf, an dem eine Werkzeugscheibe 5 um die Revolverachse drehbar gelagert ist. Die Werkzeugscheibe 5 weist am Außenumfang zwölf Arbeitsstationen 7 auf, von denen in der Draufsicht von Fig. 1 fünf sichtbar sind und in denen sich jeweils ein für die Aufnahme eines Bearbeitungswerkzeuges vorgesehener Halter 9 lösbar festlegen lässt. Von den Haltern 9, von denen in Fig. 1 sieben sichtbar sind, ist lediglich ein Halter 9, der sich in der in Fig. 1 mittig gelegenen und mit 11 bezeichneten Arbeitsposition befindet, mit einem Bearbeitungswerkzeug 13 bestückt.

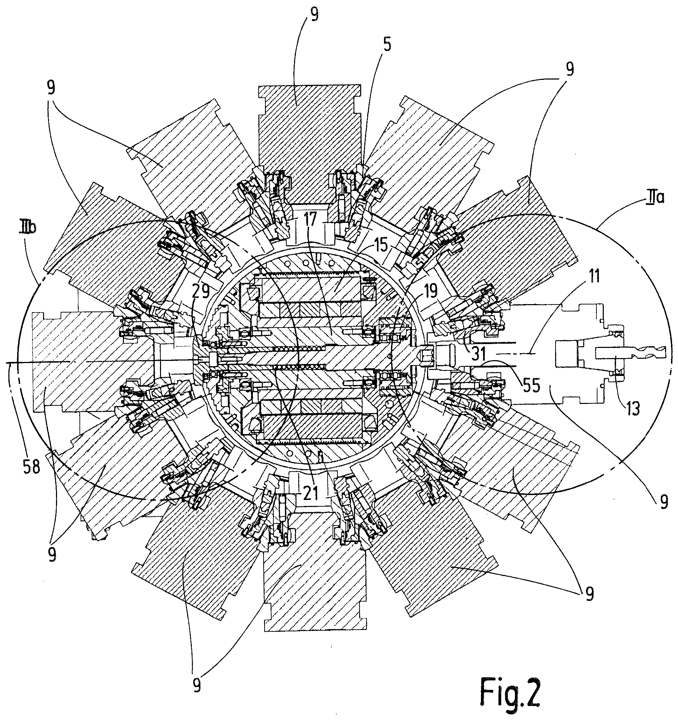

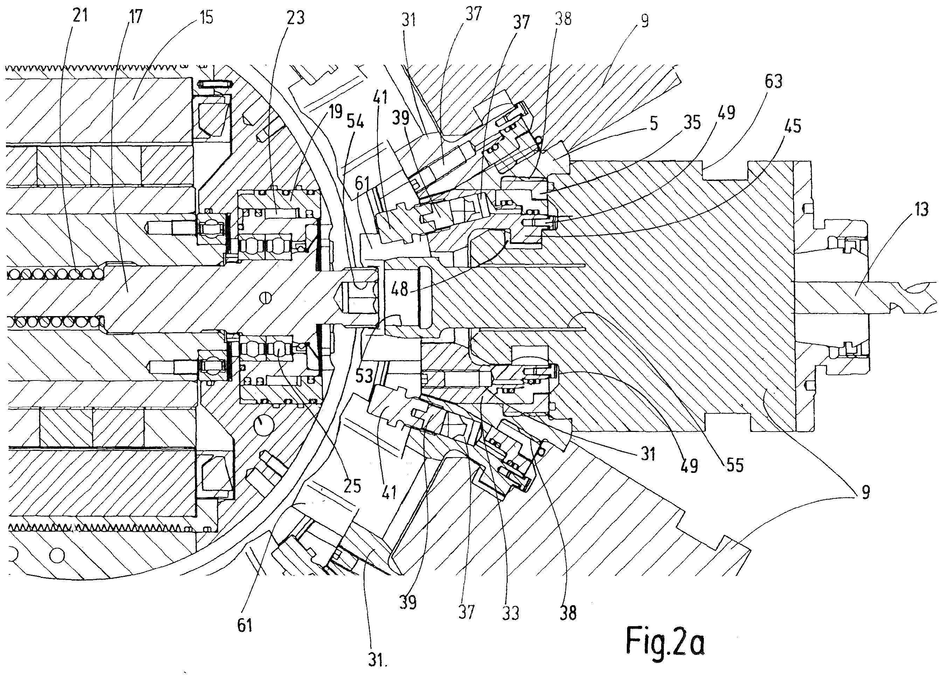

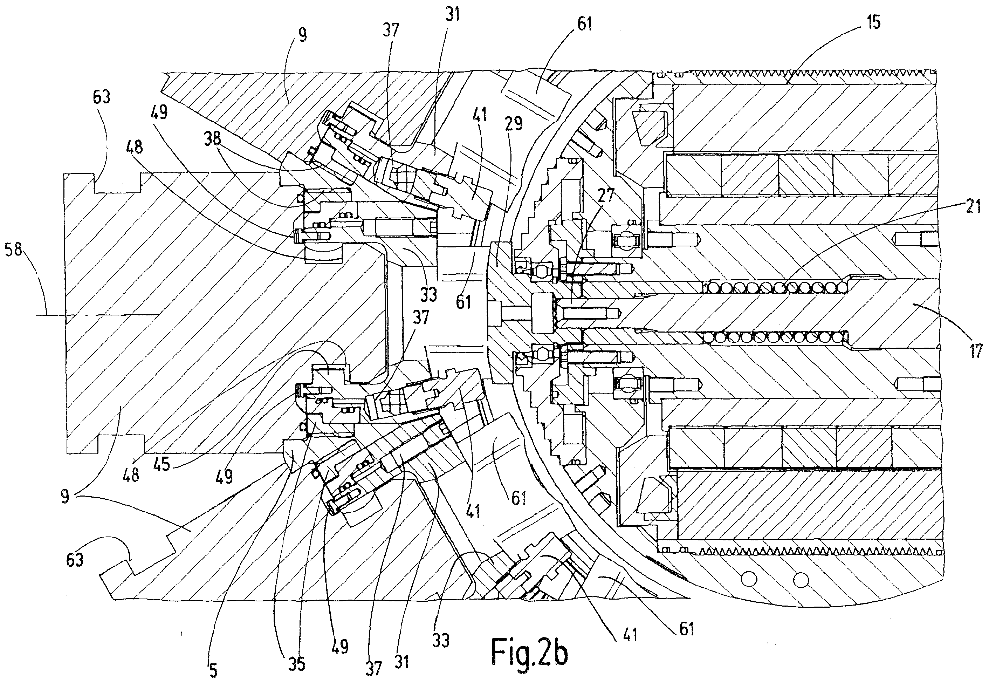

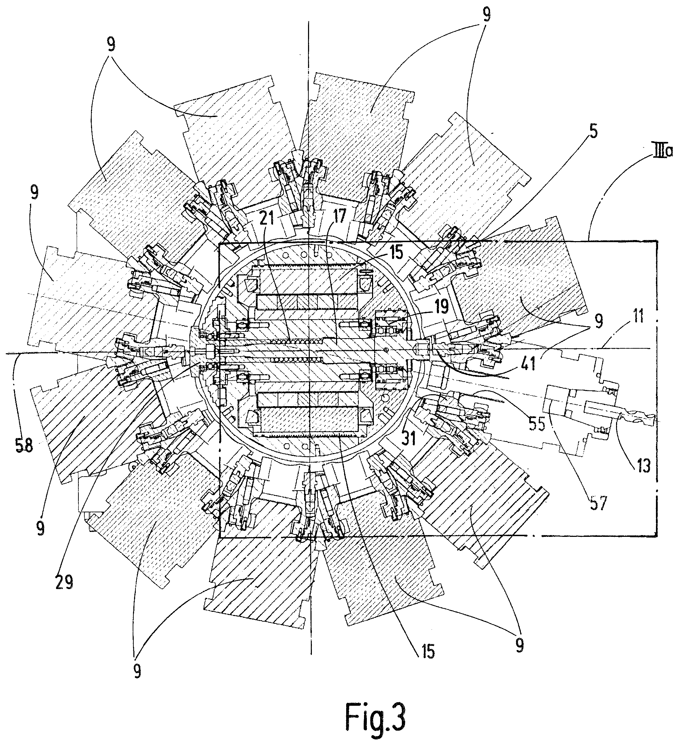

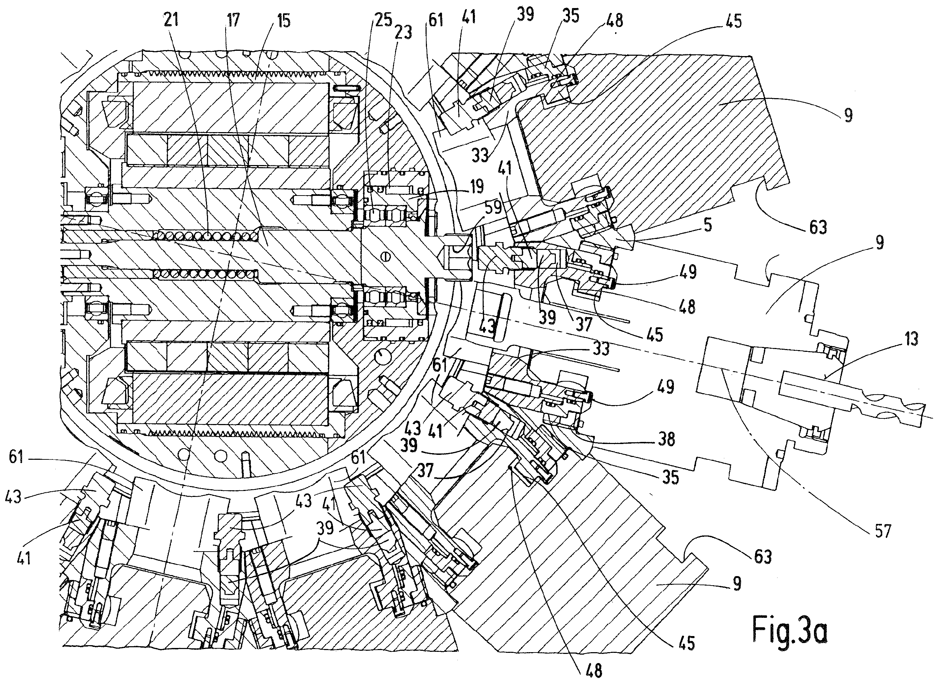

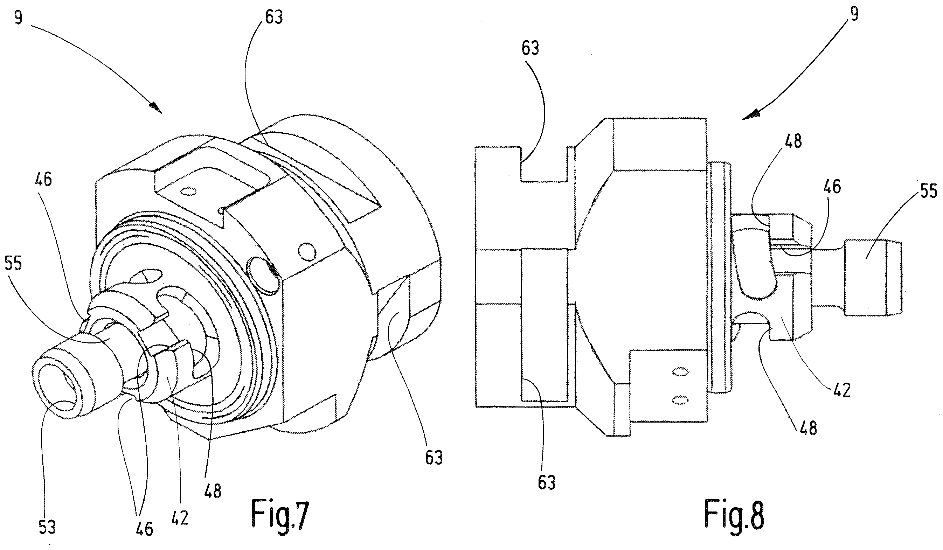

In der Fig. 2, die die Werkzeugscheibe 5 in einem Zentralschnitt mit radialer Schnittebene zeigt, befindet sich die Arbeitsposition 11, bezogen auf die Orientierung des Zeichnungsblattes der Fig. 2, in der "3°°-Uhr"-Stellung, wobei, wie bei Fig. 1, der in der Arbeitsposition 11 befindliche Halter 9 mit einem Bearbeitungswerkzeug 13 in Form eines Fräswerkzeuges bestückt ist. Wie bei Fig. 1 ist bei den übrigen Haltern 9 der Übersichtlichkeit der Zeichnung wegen die Bestückung mit Bearbeitungswerkzeugen 13 weggelassen, und in Fig. 2, wie auch in Fig. 3, sind die Halter 9 schematisch vereinfacht dargestellt. Auf die Bauweise der Halter 9 ist später unter Bezug auf die Fig. 7 und 8 näher eingegangen.

Der Werkzeugrevolver weist einen in die Werkzeugscheibe 5 integrierten Direktantrieb in Form eines Elektromotors 15 auf, der eine Antriebswelle 17 antreibt, die nicht nur den Werkzeugantrieb für ein rotierendes Bearbeitungswerkzeug 13, sondern auch den Antrieb für die automatischen Werkzeugwechselvorgänge liefert. Hierfür ist der Elektromotor 15 hinsichtlich Drehzahl, Drehrichtung und Drehwinkelschritten steuerbar. Mittels einer Schiebekupplung 19, deren Einzelheiten den Fig. 2a und 3a deutlicher entnehmbar sind, ist die Antriebswelle 17 zwischen einer ausgekuppelten Position und einer gekuppelten Position axial verschiebbar, wobei die Antriebswelle 17 mittels einer Druckfeder 21 für die Bewegung in die gekuppelte Position vorgespannt ist. Wie Fig. 2a und 3a zeigen, weist die Schiebekupplung 19 für die hydraulische Betätigung einen Druckraum 23 auf, der bei Druckversorgung mittels des Hydrauliksystems des Werkzeugrevolvers die Antriebswelle 17 zusammen mit ihrer Lagereinheit 25 in den Figuren nach links in die dargestellte, ausgekuppelte Position gegen die Kraft der Druckfeder 21 verschiebt. Bei der gezeigten, ausgekuppelten Position ist das der Schiebekupplung 19 entgegengesetzte zweite Kupplungsende 27, wie am besten in Fig. 2b gezeigt, in Kupplungseingriff mit einem drehbar gelagerten Zweiflach 29, mit dem das Kupplungsende 27 wieder außer Eingriff gelangt, wenn die Antriebswelle 17 die gekuppelte Position einnimmt. Der drehbare Zweiflach 29, der sich in der, bezogen auf die Orientierung der Fig. 2 und 3, in der "9°°-Uhr"-Position, d.h. in der Werkzeugwechselposition, befindet, bewirkt, wie unten weiter erläutert, durch Drehen das Herstellen und Lösen eines den betreffenden Halter 9 festlegenden Bajonettverschlusses.

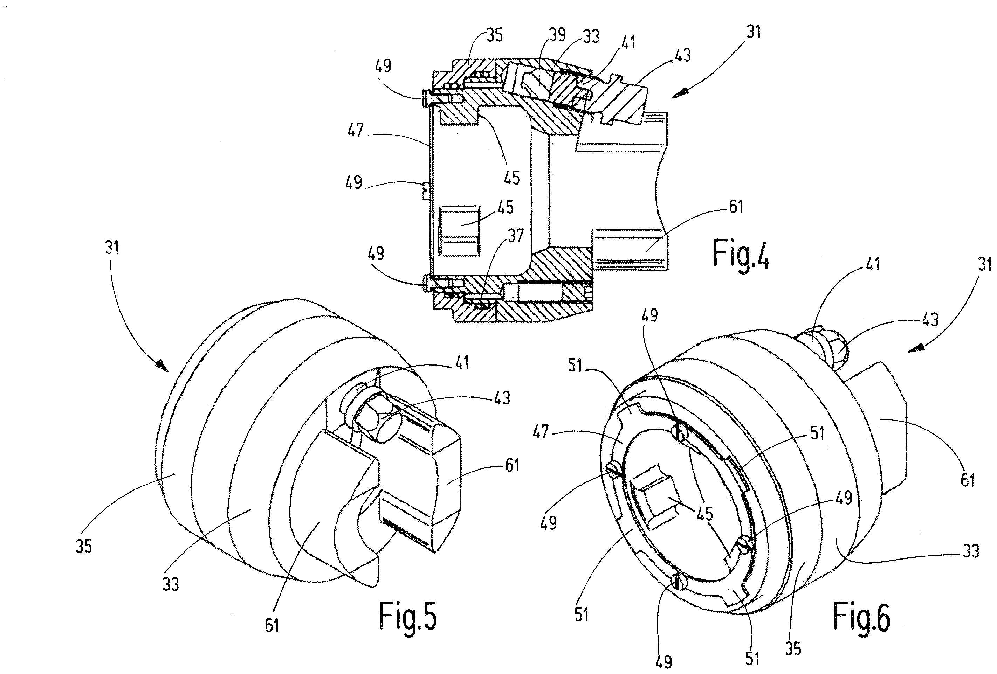

Die Festlegung der Halter 9 erfolgt über an den jeweiligen Arbeitsstationen 7 an der Werkzeugscheibe 5 ortsfest angeordnete Spanneinrichtungen, jeweils gebildet durch einen Spannring 31, dessen Bauweise am deutlichsten in Fig. 4 bis 6 gezeigt ist. Wie gezeigt, weist der Spannring 31 ein Schalenteil 33, das das Aufnahmegehäuse für den festzulegenden Halter 9 bildet, sowie einen Außenring 35 auf, der das Schalenteil 33 am Eingangsende für den jeweiligen Halter 9 umgibt. Der Außenring 35 weist, wie die Fig. 2a und 3a zeigen, ein Außengewinde 38 auf, mit dem er mit der Werkzeugscheibe 5 verschraubt ist, so dass der Außenring 35 den ortsfesten Teil des Spannringes 31 bildet. Für einen hydraulisch betätigten Spannvorgang ist im Schalenteil 33 eine Hydraulikkammer 37 (s. Fig. 4) gebildet, deren Kammerdruck sich über einen Hydraulikkolben 39 einstellen lässt, der mittels einer Betätigungseinrichtung ansteuerbar ist. Diese weist eine Einstellschraube 41 mit einem Sechskantkopf 43 auf. Der durch Einschrauben der Einstellschraube 41 erhöhte Kammerdruck in der Hydraulikkammer 37 bewirkt eine Verschiebung des Schalenteils 33 relativ zum ortsfesten Außenring 35 in Fig. 4 nach rechts. Mittels dreier Festlegevorsprünge 45, die an der Innenseite des Aufnahmeraums des Schalenteils 33 radial nach innen vorstehen, wird dadurch über einen zwischen Schalenteil 33 und Halter 9 gebildeten Bajonettverschluss ein Spannvorgang bewirkt. Wie die Fig. 7 und 8 zeigen, weist der Halter 9 zur Bildung des Bajonettverschlusses an einem Schaftteil 42, das im Aufnahmeraum des Schalenteils 33 aufnehmbar ist und eine Spindelwelle 55 des Halters 9 umgibt, Längsführungen 46 auf, durch die beim Einsetzen des Halters 9 in den Aufnahmeraum die Festlegevorsprünge 45 hindurchtreten und durch Verdrehen des Halters 9 in eine Lage über Halteflächen 48 des Schaftteils 42 gelangen, so dass ein geschlossener Bajonettverschluss mit den Festlegeteilen 45 und den Halteflächen 48 gebildet ist und die hydraulische Spannkraft zwischen Festlegeteilen 45 und Halteflächen 48 wirksam ist. Die mit geringer Hublänge erfolgende Spannbewegung des Schalenteils 33 erfolgt gegen die Wirkung eines Blattfederringes 47, der mittels Schrauben 49 am Öffnungsrand des Schalenteils 33 befestigt ist und mit radial nach außen vorstehenden Nasen 51 am Außenring 35 abgestützt ist. Bei Verringerung des Kammerdrucks in der Hydraulikkammer 37 durch Herausschrauben der Einstellschraube 41 wird das Schalenteil 33 daher aus der Spannstellung wieder zurückgestellt, so dass die Festlegevorsprünge 45 nicht mehr spannend an den Halteflächen 48 anliegen und der gebildete Bajonettverschluss durch Verdrehen des Halters 9 wieder lösbar ist. Wie bereits erwähnt, ist in den Fig. 2 und 3 die Antriebswelle 17 im entkuppelten Zustand dargestellt. Für den Antrieb des Bearbeitungswerkzeugs 13 des in den Fig. 2 und 2a in der Arbeitsposition festgelegten Halters 9 kommt die in die gekuppelte Position verfahrene Antriebswelle 17 mit dem zugeordneten Kupplungsende in Kupplungseingriff mit einem Kupplungsteil 53 der Spindelwelle 55 des betreffenden Halters 9.

Ausgehend von mit Halter 9 bestückter Werkzeugscheibe 5 erfolgt der Werkzeugwechselvorgang, bei dem das Bearbeitungswerkzeug 13 des Halters 9 ausgewechselt werden soll, der sich in der in Fig. 2 und 2a gezeigten Arbeitsposition 11 befindet, in mehreren Schritten. Die Werkzeugscheibe 5 wird bei der ausgekuppelten Position der Antriebswelle 17 um 12° im Uhrzeigersinn geschwenkt, so dass sich die Antriebswelle 17 mit einem an ihrem Kupplungsende befindlichen Innensechskant 59 in fluchtender Position zum Sechskantkopf 43 der Einstellschraube 41 der zugeordneten Spanneinrichtung 31 befindet. Durch Drucklosmachen des Druckraums 23 der Schiebekupplung 19 bewegt die Druckfeder 21 die Antriebswelle 17 in die gekuppelte Position, so dass der Innensechskant 59 am Kupplungsende der Antriebswelle 17 in Kupplungseingriff mit dem Sechskantkopf 43 der Einstellschraube 41 kommt. Durch umdrehungszahlgesteuertes Drehen der Antriebswelle 17 wird die Einstellschraube 41 zurückgeschraubt, so dass sich der Kammerdruck in der Hydraulikkammer 37 verringert und dadurch die Spannkraft der Spanneinrichtung 31 mit Hilfe der Rückstellkraft des Federringes 47 entspannt. Der Halter 9 ist jetzt nur noch über den zwischen den Festlegevorsprüngen 45 des Spannringes 31 und den Halteflächen 48 des Halters 9 gebildeten Bajonettverschluss ohne hydraulische Spannkraft gesichert. Mittels der Schiebekupplung 19 wird die Antriebswelle 17 nun wieder gegen die Kraft der Druckfeder 21 in die ausgekuppelte Position verfahren, und die Werkzeugscheibe 5 wird im Uhrzeigersinn geschwenkt, bis sich der auszuwechselnde Halter 9 in der Wechselposition 58, d.h. in der "9°°-Uhr"-Position, befindet. Wie am deutlichsten in Fig. 2b gezeigt, erstreckt sich in dieser Position der Zweiflach 29 mit seinen seitlichen Armen in den Raum zwischen Wangen 61, die in Form von Teilzylindern an der inneren Endfläche des Schalenteils 33 des Spannringes 31 vorstehen, s. Fig. 4 bis 6. Bei der ausgekuppelten Position der Antriebswelle 17 ist diese mit dem dem Zweiflach 29 zugewandten Kupplungsende 27 mit dem Zweiflach 29 in Kupplungseingriff.

Über Greiferrillen 63 (Fig. 7 und 8), die sich am Halter 9 befinden, greift ein Roboter auf diesen zu wechselnden Halter 9 zu. Mittels einer Drittelumdrehung der Antriebswelle 17 wird nun der Bajonettverschluss 45, 48 gelöst, so dass der Halter 9 für die Abnahme durch den Roboter frei ist. Dieser legt den Halter 9 in einem Magazin ab und holt sich den Halter 9 des neu einzuwechselnden Werkzeuges 13 und positioniert diesen Halter 9 in der Wechselposition 58. Durch Verdrehen des Schalenteils 33 mittels des Zweifachs 29 um ungefähr eine Drittel umdrehung wird der Bajonettverschluss wieder geschlossen. Der Roboter gibt den Halter 9 nunmehr frei. Durch Drehen der Werkzeugscheibe 5 wird der Halter 9 mit dem eingewechselten Werkzeug 13 in die Einstellposition 57 geschwenkt, in der das zugewandte Kupplungsende der Antriebswelle 17 mit der Einstellschraube 41 des Spannringes 31 fluchtet.

Durch Überführen der Antriebswelle 17 in die gekuppelte Position kann nunmehr, analog zum Lösevorgang, durch umdrehungsgesteuertes Drehen der Einstellschraube 41 in Einschraubrichtung der Halter 9 des eingewechselten Werkzeugs 13 hydraulisch gespannt werden. Nach Überführen der Antriebswelle 17 in die ausgekuppelte Position kann die Werkzeugscheibe 5 den eingewechselten Halter 9 wieder auf die Arbeitsposition **11** schwenken, wodurch der Werkzeugwechselvorgang abgeschlossen ist und die Antriebswelle 17 in die eingekuppelte Position verfahren werden kann, um das eingewechselte Bearbeitungswerkzeug 13 anzutreiben.

## Patentansprüche

1. Werkzeugrevolver, insbesondere vorgesehen für den Einsatz bei einer Werkzeugmaschine und für einen automatisierten Werkzeugwechselvorgang, mit einer schwenkbaren Werkzeugscheibe (5), die mehrere Arbeitstationen (7) mit jeweils einer zugehörigen Spanneinrichtung (31) aufweist, wobei in zumindest einer Arbeitsstation (7) jeweils ein für die Aufnahme eines Bearbeitungswerkzeuges (13) vorgesehener Halter (9) mittels der der jeweiligen Arbeitsstation (7) zugehörigen Spanneinrichtung (31) in wiederlösbarer Weise an der Werkzeugscheibe (5) festlegbar ist,
wobei zumindest in der Arbeitsposition (11) der Werkzeugscheibe (5) der Halter (9) in axialer und radialer Richtung mittels der Spanneinrichtung (31) hydraulisch und über einen Bajonettverschluss (45, 48) mechanisch festgelegt ist,
wobei in einer von der Arbeitsposition (11) der Werkzeugscheibe (5) verschiedenen Einstellposition (57) die jeweilige hydraulisch festlegende Spanneinrichtung (31) unter Belassen des Halters (9) an der Werkzeugscheibe (5) aktivier- oder deaktivierbar ist, und
wobei in einer von der Arbeits- (11) und der Einstellposition (57) verschiedenen Wechselposition der Werkzeugscheibe (5) die betreffende mechanisch festlegende Spanneinrichtung (31) den Halter (9) derart freigibt, dass dieser von der Werkzeugscheibe (5) abnehmbar und gegen einen anderen einzuwechselnden Halter (9) tauschbar ist.

2. Werkzeugrevolver nach Anspruch 1, **dadurch gekennzeichnet, dass** die jeweilige Spanneinrichtung ortsfest am Umfang der Werkzeugscheibe (5) festgelegt ist und einen hydraulisch betätigbaren Spannring (31) aufweist, mit dem eine axiale Festlegekraft auf den zuordenbaren Halter (9) ausübbar ist.

3. Werkzeugrevolver nach Anspruch 2, **dadurch gekennzeichnet, dass** die jeweilige Spanneinrichtung (31) einen Energiespeicher (47) aufweist, der nach Wegnahme der Festlegekraft die Rückstellbewegung des Spannringes (31) in seine den Halter (9) frei gebende Stellung unterstützt.

4. Werkzeugrevolver nach Anspruch 2 oder 3, **dadurch gekennzeichnet, dass** für die hydraulische Betätigung des Spannringes (31) eine Hydraulikkammer (37) in einem Aufnahmegehäuse (33) des Spannringes (31) vorgesehen ist, deren Kammerdruck sich über einen Hydraulikkolben (39) einstellen lässt, der mittels einer Betätigungseinrichtung (41) ansteuerbar ist.

5. Werkzeugrevolver nach Anspruch 4, **dadurch gekennzeichnet, dass** die Betätigungseinrichtung aus einer Einstellschraube (41) gebildet ist, die mit zunehmender Einschraubtiefe in das Aufnahmegehäuse (33) des Spannringes (31) den Hydraulikkolben (39) in die Hydraulikkammer (37) unter Erhöhung des Kammerdruckes hinein verfährt, der mit der Reduzierung der Einschraubtiefe zusehends wieder abnimmt.

6. Werkzeugrevolver nach Anspruch 5, **dadurch gekennzeichnet, dass** in die Werkzeugscheibe (5) ein Antrieb, vorzugsweise in Form eines Elektromotors (15) integriert ist, der eine Antriebswelle (17) antreibt, die mittels einer Stelleinrichtung (19) von einer gekuppelten in eine ausgekuppelte Position und umgekehrt innerhalb der Werkzeugscheibe (5) längsverfahrbar geführt ist und die in einer gekuppelten Position dem Antrieb eines im Halter (9) aufgenommenen Bearbeitungswerkzeuges (13) in der Arbeitsposition (11) der Werkzeugscheibe (5) dient, sowie dem Betätigen der Einstellschraube (41) der Spanneinrichtung in der Einstellposition (57) der Werkzeugscheibe (5).

7. Werkzeugrevolver nach Anspruch 6, **dadurch gekennzeichnet, dass** die Stelleinrichtung für das Längsverfahren der Antriebswelle einen hydraulisch ansteuerbaren Betätigungskolben (19) aufweist, der entgegen der Kraft eines weiteren Energiespeichers (21) die Antriebswelle (17) von der gekuppelten in die entkuppelte Position fährt, wobei bei einem Drucklosmachen des hydraulischen Betätigungskolbens (19) dieser Energiespeicher (21) die Antriebswelle (17) wieder in die gekuppelte Position bringt.

8. Werkzeugrevolver nach einem der vorstehenden Ansprüche, **dadurch gekennzeichnet, dass** die Antriebswelle (17) an ihrem dem Ein- und Auskuppeln dienenden, längsverfahrbaren Kupplungsende ein weiteres Kupplungsende (27) aufweist, das in der Wechselposition der Werkzeugscheibe (5) um einen vorgebbaren Schwenkwinkel gedreht, den Bajonettverschluss (45, 48) zwischen Halter (9) und Spanneinrichtung (31) löst und wiederherstellt, zwecks Auswechselns des Halters (9) gegen einen anderen Halter (9).

9. Werkzeugrevolver nach einem der vorstehenden Ansprüche, **dadurch gekennzeichnet, dass** der Bajonettverschluss (45, 48) in einer Aufnahme (33) der Spanneinrichtung (31) für den Halter (9) mindestens einen Festlegevorsprung (45) aufweist, der entlang einer zuordenbaren Längsführung (46) des Halters (9) in eine Eingriffsposition verfahren, nach Verschwenken der Aufnahme (33) der Spanneinrichtung (31) mittels der Antriebswelle (17) unter Herstellen des Bajonettverschlusses (45, 48) in eine Festlegeposition gelangt, bei der der Halter (9) in der Spanneinrichtung (31) aufgenommen ist, und wobei der Bajonettverschluss (45, 48) sich in umgekehrter Abfolge wieder lösen lässt.

## Claims

1. Tool turret, in particular intended for use in a machine tool and for an automated tool change process, having a pivotable tool disc (5) comprising a plurality of workstations (7) each with a corresponding clamping device (31),
a holder (9) provided for receiving a machining tool (13) being able to be fixed in a releasable manner on the tool disc (5) in at least one workstation (7) in each case by means of the clamping device (31) associated with the respective workstation (7),
the holder (9), at least in the working position (11) of the tool disc (5), being fixed in the axial and radial direction hydraulically by means of the clamping device (31) and mechanically via a bayonet closure (45, 48),
the respective hydraulically fixing clamping device (31) being able to be activated or deactivated in an adjustment position (57) that is different to the working position (11) of the tool disc (5), leaving the holder (9) on the tool disc (5), and
the relevant mechanically fixing clamping device (31) releasing the holder (9) in a change position of the tool disc (5) that is different to the working position (11) and the adjustment position (57) such that said holder can be removed from the tool disc (5) and replaced by a different holder (9) in exchange.

2. Tool turret according to claim 1, **characterised in that** the respective clamping device is fixed in a stationary manner on the circumference of the tool disc (5) and has a hydraulically actuatable clamping ring (31) with which an axial fixing force can be applied to the assignable holder (9).

3. Tool turret according to claim 2, **characterised in that** the respective clamping device (31) has an energy accumulator (47), which supports the resetting movement of the clamping ring (31) into its position releasing the holder (9) after the fixing force is removed.

4. Tool turret according to either claim 2 or claim 3, **characterised in that** a hydraulic chamber (37) is provided in a receiving housing (33) of the clamping ring (31) for hydraulic actuation of the clamping ring (31), the chamber pressure of said housing being able to be adjusted via a hydraulic piston (39), which can be actuated by means of an actuating device (41).

5. Tool turret according to claim 4, **characterised in that** the actuating device is formed by an adjusting screw (41), which moves the hydraulic piston (39) into the hydraulic chamber (37), increasing the chamber pressure, as the screw-in depth into the receiving housing (33) of the clamping ring (31) increases, said chamber pressure gradually falling again as the screw-in depth reduces.

6. Tool turret according to claim 5, **characterised in that** a drive, preferably in the form of an electric motor (15), is integrated in the tool disc (5), said drive driving a drive shaft (17), which is guided in a longitudinally displaceable manner inside the tool disc (5) by means of an adjusting device (19) from a coupled position into an uncoupled position and vice versa and which, in a coupled position, serves to drive a machining tool (13) received in the holder (9) in the working position (11) of the tool disc (5), and to actuate the adjusting screw (41) of the clamping device in the adjustment position (57) of the tool disc (5).

7. Tool turret according to claim 6, **characterised in that** the adjusting device for longitudinal displacement of the drive shaft has a hydraulically actuatable actuating piston (19), which drives the drive shaft (17) from the coupled position into the uncoupled position against the force of a further energy accumulator (21), this energy accumulator (21) moving the drive shaft (17) back into the coupled position when the hydraulic actuating piston (19) is depressurised.

8. Tool turret according to any of the preceding claims, **characterised in that** the drive shaft (17) has a further coupling end (27) at its longitudinally displaceable coupling end used for coupling and uncoupling, said further coupling end releasing and reestablishing the bayonet closure (45, 48) between holder (9) and clamping device (31) when rotated about a predefinable pivot angle in the change position of the tool disc (5) for the purpose of replacing the holder (9) with another holder (9).

9. Tool turret according to any of the preceding claims, **characterised in that** the bayonet closure (45, 48) has at least one fixing protrusion (45) in a mount (33) of the clamping device (31) for the holder (9), said fixing protrusion, if moved along an assignable longitudinal guide (46) of the holder (9) into an engagement position, after pivoting the mount (33) of the clamping device (31) by means of the drive shaft (17), establishing the bayonet closure (45, 48), passing into a fixing position in which the holder (9) is received in the clamping device (31), and wherein the bayonet closure (45, 48) can be released again in the reverse sequence.

## Revendications

1. Tourelle porte-outil prévue, en particulier, pour être utilisée dans une machine-outil et pour un changement automatisé de l'outil, comprenant un disque (5) pivotant pour outil, qui a plusieurs postes (7) de travail ayant chacun son propre dispositif (31) de serrage, dans laquelle, dans au moins un poste (7) de travail respectivement un porte-outil (9), prévu pour la réception d'un outil (13) d'usinage, peut, au moyen du dispositif (31) de serrage propre au poste (7) de travail respectif, être fixé au disque (5) pour outil, de manière à pouvoir être redétaché,
dans laquelle, au moins dans la position (11) de travail du disque (5) pour outil, le porte-outil (9) est fixé, dans la direction axiale et radiale, au moyen du dispositif (31) de serrage, hydrauliquement et mécaniquement par une fermeture (45, 48) à baïonnette,
dans laquelle, dans une position (57) de réglage différente de la position (11) de travail du disque (5) pour outil, le dispositif (31) respectif par fixation hydraulique peut être activé ou désactivé en quittant le porte-outil (9) sur le disque (5) pour outil, et dans laquelle, dans une position de changement différente de la position (11) de travail et de la position (57) de réglage du disque (5) pour outil, le dispositif (31) concerné à fixation mécanique libère le porte-outil (9), de manière à ce que celui-ci puisse être retiré du disque (5) pour outil et puisse être remplacé par un autre porte-outil (9) de remplacement.

2. Tourelle porte-outil suivant la revendication 1, **caractérisée en ce que** le dispositif respectif de serrage est fixé d'une manière fixe en position sur le pourtour du disque (5) pour outil et a un anneau (31) de serrage pouvant être actionné hydrauliquement, par lequel une force axiale de fixation peut être appliquée au porte-outil (9) pouvant être associé.

3. Tourelle porte-outil suivant la revendication 2, **caractérisée en ce que** le dispositif (31) respectif de serrage a un accumulateur (47) d'énergie, qui, après suppression de la force de fixation, vient à l'appui du mouvement de rappel de l'anneau (31) de serrage dans sa position libérant le porte-outil (9).

4. Tourelle porte-outil suivant la revendication 2 ou 3, **caractérisée en ce qu'**il est prévu, pour l'actionnement hydraulique de l'anneau (31) de serrage, une chambre (37) hydraulique dans une enveloppe (33) de logement de l'anneau (31) de serrage, dont la pression dans la chambre peut être réglée par un vérin (39) hydraulique, qui peut être commandé au moyen d'un dispositif (41) d'actionnement.

5. Tourelle porte-outil suivant la revendication 4, **caractérisée en ce que** le dispositif d'actionnement est formé d'une vis (41) de réglage, qui, au fur et à mesure qu'augmente la profondeur du vissage dans l'enveloppe (33) de réception de l'anneau (31) de serrage, déplace le vérin (39) hydraulique dans la chambre (37) hydraulique avec augmentation de la pression dans la chambre, laquelle diminue à vue d'œil avec la réduction de la profondeur de vissage.

6. Tourelle porte-outil suivant la revendication 5, **caractérisée en ce que**, dans le disque (5) pour outil est intégré un entraînement, de préférence sous la forme d'un moteur (15) électrique, qui entraîne un arbre (17) d'entraînement, lequel, au moyen d'un dispositif (19) de réglage, est guidé, avec possibilité de se déplacer longitudinalement d'une position accouplée à une position découplée et inversement, dans le disque (5) pour outil et qui, dans une position accouplée, sert, dans la position (11) de travail du disque (5) pour outil, à l'entraînement d'un outil (13) d'usinage reçu dans le porte-outil (9), ainsi qu'à l'actionnement de la vis (41) de réglage du dispositif de serrage dans la position (57) de serrage du disque (5) pour outil.

7. Tourelle porte-outil suivant la revendication 6, **caractérisée en ce que** le dispositif de réglage pour le déplacement longitudinal de l'arbre d'entraînement a un piston (19) d'actionnement, qui peut être commandé hydrauliquement et qui, à l'encontre de la force d'un autre accumulateur (21) d'énergie, fait passer l'arbre (17) d'entraînement de la position accouplée à la position découplée, dans laquelle, lorsque le piston (19) d'actionnement hydraulique n'est pas soumis à une pression, cet accumulateur (21) d'énergie remet l'arbre (17) d'entraînement dans la position accouplée.

8. Tourelle porte-outil suivant l'une des revendications précédentes, **caractérisée en ce que** l'arbre (17) d'entraînement a, à son extrémité d'accouplement, déplaçable longitudinalement et servant à l'accouplement et au désaccouplement, une autre extrémité (27) d'accouplement, qui, dans la position de changement du disque (5) pour outil, tourne d'un angle de pivotement pouvant être donné à l'avance, met fin à la fermeture (45, 48) à baïonnette entre le porte-outil (9) et le dispositif (31) de serrage et la rétablit en vue du remplacement du porte-outil (9) par un autre porte-outil (9).

9. Tourelle porte-outil suivant l'une des revendications précédentes, **caractérisée en ce que** la fermeture (45, 48) à baïonnette a, dans un logement (33) du dispositif (31) de serrage du porte-outil (9), au moins une saillie (45) de fixation, qui vient, le long d'un guidage (46) longitudinal pouvant être associé du porte-outil (9), dans une position de prise, arrive, après pivotement du logement (33) du dispositif (31) de serrage au moyen de l'arbre (17) d'entraînement en produisant la fermeture (45 48) à baïonnette, dans une position de fixation, dans laquelle le porte-outil (9) est reçu dans le dispositif (31) de serrage, et dans lequel la fermeture (45, 48) à baïonnette peut être redéfaite dans la séquence inverse.
